# EUROPÄISCHE PATENTSCHRIFT

(11) **EP 2 536 957 B1**
(45) Veröffentlichungstag und Bekanntmachung des Hinweises auf die Patenterteilung: **12.08.2015**
(21) Anmeldenummer: 11705186.2
(22) Anmeldetag: 11.02.2011
(51) Int. Cl.: F15B 21/04, F15B 11/06, B60L 5/32

(54) **VORRICHTUNG ZUM BEREITSTELLEN EINES VERSORGUNGSDRUCKES**
DEVICE FOR PROVIDING A SUPPLY PRESSURE
DISPOSITIF POUR LA FOURNITURE D'UNE PRESSION D'ALIMENTATION

(30) Priorität: 18.02.2010 DE 102010008636
(43) Veröffentlichungstag der Anmeldung: 26.12.2012
(73) Patentinhaber: Siemens Aktiengesellschaft, 80333 München (DE)
(72) Erfinder: STOFF, Helmut, 83624 Otterfing (DE)
(86) Internationale Anmeldenummer: PCT/EP2011/052033
(87) Internationale Veröffentlichungsnummer: WO 2011/101293

(56) Entgegenhaltungen:
- EP-A2- 2 093 096
- DE-A1- 2 800 877
- DE-A1- 3 709 797
- DE-B3- 10 336 058

## Beschreibung

Die Erfindung betrifft eine Vorrichtung zum Bereitstellen eines Versorgungsdruckes für einen Verbraucher mit einem Hauptluftsystem, das eine Druckluftversorgungsanlage, eine Hauptluftbehälterleitung und einen Hauptluftbehälter aufweist, und einem Notfalldrucksystem zur Erzeugung des Versorgungsdruckes unabhängig vom Hauptluftsystem, wobei das Hauptluftsystem und das Notfalldrucksystem unabhängig voneinander mit dem Verbraucher verbindbar sind.

Eine solche Vorrichtung ist aus der DE 103 36 058 B3 bereits bekannt. Die dort beschriebene Vorrichtung umfasst ein Hauptluftsystem mit einer Druckluftversorgungsanlage zum Erzeugen eines Versorgungsdruckes. Das Hauptluftsystem dient u. a. dazu, einen Verbraucher, beispielsweise die Steuerung eines Stromabnehmers eines Schienenfahrzeugs, mit Druckluft zu versorgen. Die Stromabnehmersteuerung ist zum fortwährenden Andrücken eines Stromabnehmers an einen Fahrdraht eingerichtet. Darüber hinaus ist ein Hilfsdrucksystem beschrieben, das den Versorgungsdruck für die Stromabnehmersteuerung bei Ausfall des Hauptluftsystems bereitstellt.

Aus der DE 10 2004 038 705 B3 ist eine Druckluftanlage mit einem Kompressor bekannt, der zwei voneinander durch Ventile abgeschottete Druckluftbehälter mit Druckluft versorgt. Jeder der besagten Druckluftbehälter ist über ein Steuerventil mit einem Verbraucher verbunden.

Unter einem Fahrdraht fahrende schienengebundene Fahrzeuge weisen in der Regel einen auch als Wippe bezeichneten Stromabnehmer auf, der von einer pneumatischen Stromabnehmersteuerung dynamisch gegen den Fahrdraht gedrückt wird. Hierzu muss die Stromabnehmersteuerung mit einem Versorgungsdruck beaufschlagt werden. Die über den Fahrdraht bereitgestellte elektrische Versorgungsenergie ist unter anderem zum Antrieb einer Druckluftversorgungsanlage des Hauptluftsystems vorgesehen, das bei Normalbetrieb des Schienenfahrzeugs den Versorgungsdruck für den Stromabnehmer bereitstellt.

Bei längeren Standzeiten des abgerüsteten Schienenfahrzeugs kann der Druck des Hauptluftsystems aufgrund von Undichtigkeiten unter den für das Anheben des Stromabnehmers erforderlichen Versorgungsdruck abfallen, so dass der Stromabnehmer nicht mehr gehoben werden kann. Da der Kompressor des Hauptluftsystems vom Fahrdraht mit der zur Drucklufterzeugung notwendigen Energie versorgt wird, ist das Hauptluftsystem bei abgefallenem Stromabnehmer nicht mehr in der Lage, den zum Wiederandrücken des Stromabnehmers an den Fahrdraht notwendigen Versorgungsdruck bereitzustellen. Zum Aufrüsten des schienengebundenen Fahrzeugs ist daher ein Hilfsdrucksystem vorgesehen, dessen Antrieb von der Energieversorgung über den Fahrdraht unabhängig ist. Hierzu dient beispielsweise ein Batterie betriebener Hilfskompressor oder eine zusätzliche Druckgasflasche.

Der Erfindung liegt die Aufgabe zugrunde, eine Vorrichtung der eingangs genannten Art bereitzustellen, die eine einfache, kostengünstige und noch zuverlässigere Erzeugung des Versorgungsdruckes ermöglicht.

Die Erfindung löst diese Aufgabe durch einen Vorratsbehälter, der über ein Absperrventil mit dem Hauptluftsystem oder dem Verbraucher verbunden ist, wobei das Notfalldrucksystem ausgangsseitig mit einem Dosierbehälter verbunden ist.

Ein wesentlicher Vorteil der erfindungsgemäßen Vorrichtung besteht darin, dass durch das Vorsehen eines Vorratsbehälters, der über ein einziges Absperrventil mit dem Verbraucher verbunden ist, ein Gasvolumen vorgehalten wird, das zuverlässig einen ausreichenden Versorgungsdruck für den Verbraucher bereitstellt. Der Vorratsbehälter kann daher auch nach längeren Standzeiten noch dazu verwendet werden, zuverlässig den Versorgungsdruck bereitzustellen, so dass ein Aufrüsten eines Schienenfahrzeugs ermöglicht ist. Dabei ist der zusätzlich zum primär genutzten Vorratsbehälter, der quasi ein erstes Hilfsluftsystem darstellt, ein zweites Hilfsluftsystem, das als Notfalldrucksystem bezeichnet ist, als Zusatzsicherung vorgesehen, so dass die Sicherheit, mit der ein Aufrüsten des Schienenfahrzeugs durchgeführt werden kann, noch weiter erhöht ist.

Die Erfindung löst diese Aufgabe ferner durch ein Schienenfahrzeug mit einer solchen Vorrichtung.

Der Vorratsbehälter verfügt über einen einzigen Zugang, der mit dem besagten Absperrventil dicht verschlossen werden kann. Über das besagte Absperrventil, das dem Vorratsbehälter vorteilhafterweise unmittelbar nachgeordnet ist, ist der Vorratsbehälter somit sowohl mit dem Hauptluftsystem als auch mit dem Verbraucher verbindbar. Dabei sorgen zweckmäßige Ventile dafür, dass bei ausreichend Druck im Hauptluftsystem der Verbraucher allein vom Hauptluftsystem mit Druckluft versorgt wird. Bei geöffnetem Absperrventil ist darüber hinaus der Vorratsbehälter durch das Hauptluftsystem befüllbar. Bei Ausfall des Hauptluftsystems sorgen die zweckmäßigen Ventile hingegen dafür, dass das Hauptluftsystem von dem Vorratsbehälter und dem Verbraucher abgeschottet ist. Darüber hinaus ist auch das Notfalldrucksystem durch entsprechende Ventile von dem Vorratsbehälter abtrennbar.

Gemäß einer diesbezüglich zweckmäßigen Weiterentwicklung sind das Hauptluftsystem und/oder das Notfalldrucksystem jeweils über ein Rückschlagventil mit dem Verbraucher und dem Vorratsbehälter verbunden. Das Rückschlagventil sorgt für eine besonders einfache und kostengünstige Abschottung des Hauptluftsystems beziehungsweise Notfalldrucksystems vom Verbraucher und vom Vorratsbehälter bei Ausfall des Hauptluftsystems beziehungsweise bei nicht betätigtem Notfalldrucksystem.

Als besonders vorteilhaft wird es angesehen, wenn der Vorratsbehälter hinsichtlich seines Aufnahmevolumens so bemessen ist, dass er ein für eine zuverlässige Bereitstellung des Versorgungsdruckes ausreichendes Gesamtvolumen aufweist. Durch eine solche Ausgestaltung des Behälters lässt sich bei Ausfall des Hauptluftsystems ein erfolgreiches Aufrüsten eines schienengebundenen Fahrzeugs erreichen.

Vorteilhafterweise ist das Absperrventil ein ansteuerbares Leckage freies Absperrventil. Leckage freie Absperrventile sind beispielsweise Magnetventile in Sitzbauweise mit Zwangsanhebung. Sowohl solche Magnetventile in Sitzbauweise mit Zwangsanhebung als auch sonstige Leckage freien Absperrventile, wie Leckage freie Absperrhähne und dergleichen, sind seit Längerem bekannt, jedoch ist ihr Einsatz bei der erfindungsgemäßen Vorrichtung besonders vorteilhaft. Mit Hilfe der Leckage freien Ventile kann ein Vorratsdruck, der beispielsweise einem Druckluftvolumen aufgeprägt ist, mit dem der Vorratsbehälter befüllt ist, auch über längere Stillstandszeiten hinweg aufrecht erhalten werden.

Ein großer Vorteil der erfindungsgemäßen Vorrichtung mit leckagefrei abgesperrtem, großzügig dimensioniertem Vorratsbehälter als erstes Hilfsluftsystem und mit Notfalldrucksystem, beispielsweise mit Druckgas-Energiespeicher, liegt darin begründet, dass keinerlei zusätzliche Gastrocknung erforderlich ist. Der Vorratsbehälter wird mit bereits getrockneter Luft aus dem Hauptluftsystem befüllt. Das Notfalldrucksystem arbeitet bevorzugt mit Druckgas ohne Wasseranteil. Hierdurch werden Systemausfälle durch ausfallendes Wasser mit Vereisung und Korrosion im Gefolge sicher vermieden.

Zweckmäßigerweise weist das Notfalldrucksystem eine Druckgasflasche auf. Die Verwendung eines solchen Notfalldrucksystems erübrigt das Bereithalten eines Energiespeichers, beispielsweise in Form einer Batterie oder eines Akkumulators, mit dem dann eine Drucklufterzeugungsanlage, beispielsweise ein Kompressor, angetrieben werden könnte. Ein solches Notfalldrucksystem ist in der eingangs genannten DE 103 36 058 bereits beschrieben.

Hierzu ist es zweckmäßig, dass die Druckgasflasche mit einem Druck beaufschlagt ist, der größer ist als der Versorgungsdruck, der an dem Verbraucher anliegt. Als zweckmäßige Gase bieten sich insbesondere trockene Gase, wie beispielsweise Stickstoff, getrocknete Druckluft oder dergleichen, an, da es ansonsten zu unerwünschten Effekten, wie beispielsweise Wasserausfall und in Folge davon zu Vereisung, Funktionsausfall oder Korrosion kommen kann.

Zweckmäßigerweise ist die Druckgasflasche eine mit Hand betätigbare Druckgasflasche. Hierzu ist die Druckgasflasche ausgangsseitig mit zweckmäßigen handbetätigbaren Ventilen bestückt.

Abweichend von der oben genannten Variante weist das Notfalldrucksystem einen Energiespeicher und eine von dem Energiespeicher antreibbare Notfalldrucklufterzeugungsanlage auf.

In jedem Falle ist erfindungsgemäß ein dem Notfalldrucksystem nachgeschalteter Dosierbehälter vorgesehen. Mit Hilfe des Dosierbehälters kann der Lokführer beispielsweise das Notfalldrucksystem so lange betätigen, bis der Dosierbehälter ausreichend mit Fluid befüllt ist. Anschließend kann das Notfalldrucksystem, beispielsweise eine Druckgasflasche, wieder vom Dosierbehälter abgetrennt werden. Auf diese Weise ist die Gefahr herabgesetzt, dass das in Betrieb genommene Notfalldrucksystem im Anschluss an das Aufrüsten vergessen wird und ein Abstellen des Notfalldrucksystems unterbleibt. In diesem Falle würde beispielsweise eine Druckgasflasche in Folge von Undichtigkeiten so weit entleert, dass diese nicht mehr den notwendigen Versorgungsdruck für den Verbraucher, z.B. eine Stromabnehmersteuerung, bereitstellen kann.

Gemäß der zweiten Variante, bei der das Notfalldrucksystem einen Energiespeicher aufweist, könnte sich, wenn der Zugführer das Abstellen des Notfalldrucksystems vergisst, der Energiespeicher, Batterie oder Akkumulator ebenfalls vollständig entladen, so dass auch in diesem Fall das Notfalldrucksystem ausfällt. Mit Hilfe des Dosierbehälters ist jedoch ein kurzzeitiges Betätigen des Notfalldrucksystems ermöglicht. Ist der Dosierbehälter mit einem ausreichenden Gasvolumen befüllt, das mit ausreichend hohem Druck beaufschlagt ist, kann das Notfalldrucksystem wieder abgetrennt beziehungsweise abgeschaltet werden. Die Zeitdauer zum Befüllen liegt im Bereich weniger Sekunden, so dass die Gefahr des Vergessens des Abschaltens des Notfalldrucksystems gering ist.

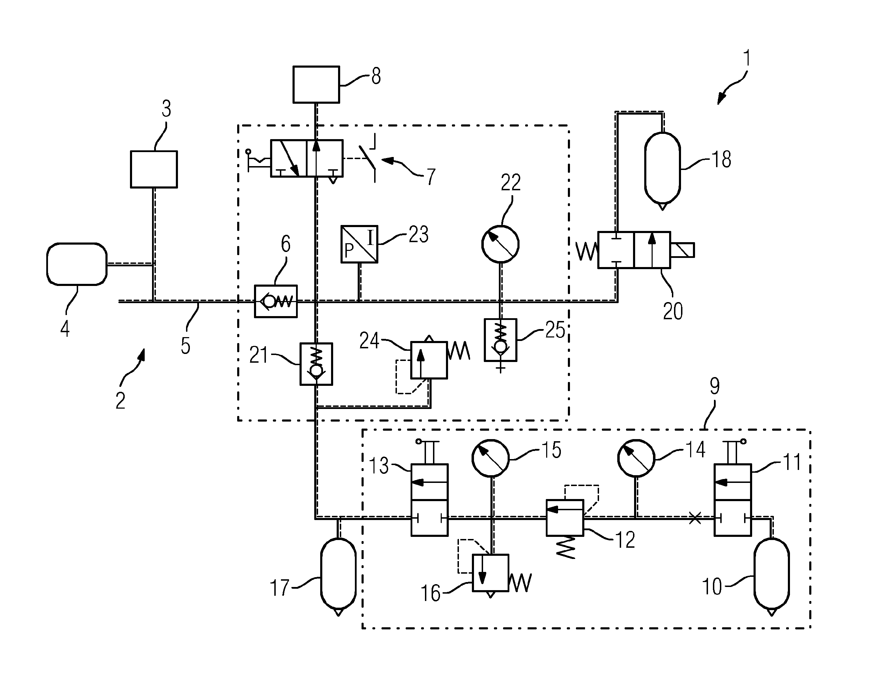

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei die
- Figur: eine schematische Darstellung eines Ausführungsbeispiels der erfindungsgemäßen Vorrichtung zeigt.

Die Figur zeigt ein Ausführungsbeispiel der erfindungsgemäßen Vorrichtung in einer schematischen Darstellung. Die Vorrichtung 1 weist ein Hauptluftsystem 2 mit einer Druckluftversorgungsanlage 3, einem Hauptluftbehälter 4 sowie einer Hauptluftbehälterleitung 5 auf. Die Hauptluftbehälterleitung 5 ist über ein Rückschlagventil 6 und ein Schlüsselschalterventil 7 mit einer Stromabnehmersteuerung 8 als Verbraucher verbunden. Die Stromabnehmersteuerung 8 kann auch als Pantograph-Steuerung bezeichnet werden. Mit Hilfe der Pantograph-Steuerung 8 ist es möglich, einen Stromabnehmer, der auf einem Dach eines Schienenfahrzeugs angeordnet ist, dynamisch gegen einen Fahrdraht zu pressen, unter dem das Schienenfahrzeug fährt. Hierzu wird ein Fluid, beispielsweise Druckluft, benötigt, das mit einem ausreichend hohen Druck beaufschlagt ist, der hier Versorgungsdruck genannt wird und eingangsseitig der Stromabnehmersteuerung 8 anliegt.

Neben dem Hauptluftsystem 2 weist die Vorrichtung 1 auch ein Notfalldrucksystem 9 auf. Das Notfalldrucksystem 9 besteht im gezeigten Ausführungsbeispiel aus einer Druckgasflasche 10, die mit trockener Druckluft, Stickstoff oder dergleichen befüllt und mit einem Druck von 200 bar beaufschlagt ist. Über ein erstes Hand betätigbares Ventil 11, ein Druckminderventil 12 und über ein weiteres Hand betätigbares Ventil 13 kann ausgangsseitig des Notfalldrucksystems 9 trockene Druckluft oder ein sonstiges getrocknetes Gas bereitgestellt werden, das mit dem gewünschten Versorgungsdruck beaufschlagt ist. Die genaue Druckauswahl wird von zwei Manometern 14 und 15, die eingangs- beziehungsweise ausgangsseitig des Druckminderventils 12 mit diesem verbunden sind, erleichtert. Darüber hinaus ist ein Sicherheitsventil 16 vorgesehen, das eine Verbindung mit der Außenatmosphäre bei einem zu großen Überdruck ermöglicht.

Ausgangsseitig des Notfalldrucksystems 9 ist ein Dosierbehälter 17 angeordnet, der nach dem Öffnen der Druckgasflasche 10 durch die Handventile 11 und 13 mit Druckluft befüllt wird.

Der Dosierbehälter 17 weist in dem gezeigten Ausführungsbeispiel ein Volumen von 10 Litern auf. Nach dem Befüllen des Dosierbehälters 17 kann, beispielsweise ein Lokomotivführer, die Handventile 13 beziehungsweise 11 wieder schließen, so dass die Gefahr eines unbeabsichtigten Offenstehenlassen des Notfalldrucksystems 9 vermindert ist. Das in dem Dosierbehälter 17 gespeicherte Gasvolumen, das mit dem Versorgungsdruck beaufschlagt ist, ist ausreichend, um den Stromabnehmer zum Aufrüsten des Schienenfahrzeugs gegen den Fahrdraht zu pressen und den Anpressdruck für eine genügend lange Zeit aufrecht zu erhalten. Nach dem Kontakt zwischen Stromabnehmer und Fahrdraht ist die Drucklufterzeugungsanlage 3 des Hauptluftsystems 2 mit Elektroenergie versorgt. Sobald ein ausreichender Druck aufgebaut ist, ist das Hauptluftsystem 2 betriebsbereit.

Als primäres Hilfsluftsystem zum Anheben des Stromabnehmers unabhängig vom Haupt- 2 und Notfalldrucksystem 9 dient ein Vorratsbehälter 18, der einen einzigen Zugang aufweist, über den dieser mit der Hauptluftbehälterleitung 5 und somit mit dem Hauptluftsystem 2 verbunden ist. Zum Trennen des Vorratsbehälters 18 von dem Hauptluftsystem 2 ist dem Vorratsbehälter 18 ein Leckage freies Absperrventil 20, das als Magnetventil mit Zwangsanhebung ausgestaltet ist, vorgeschaltet. Über das Absperrventil 20 ist der Vorratsbehälter 18 ferner mit dem Schlüsselschalterventil 7 und bei dessen entsprechender Betätigung mit der Stromabnehmersteuerung 8 verbunden. Bei Ausfall der Hauptluftsystems 2, beispielsweise bei abgerüstetem Schienenfahrzeug, verhindern Rückschlagventile 6 und 21 ein Strömen des Gases des Vorratsbehälters 18 in unerwünschte Richtungen, also in Richtungen, die nicht zur Stromabnehmersteuerung 8 führen.

Beim Abstellen eines Schienenfahrzeugs wird das Leckage freie Absperrventil 20 geschlossen, so dass der Vorratsbehälter 18, der bei geöffnetem Absperrventil 20 zuvor vom Hauptluftsystem 2 mit Druckluft befüllt wurde, sowohl von dem Hauptluftsystem als auch von der Stromabnehmersteuerung 8 Leckage frei abgetrennt ist. In dieser Stellung des Absperrventils 20 hält sich der Druck im Vorratsbehälter 18 auch bei längeren Standzeiten des Schienenfahrzeugs. Zum Aufrüsten des Schienenfahrzeugs, also zum Anpressen des Stromabnehmers unter den Fahrdraht, wird das Leckage freie Absperrventil 20 geöffnet, so dass über das Schlüsselschalterventil 7 für die Stromabnehmersteuerung 8 ein ausreichendes Druckluftvolumen mit ausreichendem Druck, also dem Versorgungsdruck, bereitgestellt ist. Das Aufrüsten des Schienenfahrzeugs ist also sowohl mittels des Vorratsbehälters 18 als auch mit Hilfe des Notfalldrucksystems 9 ermöglicht wobei das Aufrüsten zunächst über den Vorratsbehälter 18 erfolgt. Das Notfalldrucksystem 9 dient als Backup-System für den Fall, dass sich der Vorratsbehälters unzeitig entleert hat.

Der Vollständigkeit halber sei ausgeführt, dass dem Leckage freien Absperrventil 20 ein Manometer 22 zum Ablesen des vom Vorratsbehälter 18 bereitgestellten Druckes nachgeordnet ist. Ein Wandler 23 dient der Rückmeldung eines ausreichenden Versorgungsdruckes an die zentrale Steuerung. Ferner ist ein Sicherheitsventil 24 bereitgestellt, das zwischen dem Dosierbehälter 7 und einem Rückschlagventil 21 angeordnet ist. Ein Messstutzen 25 dient Testzwecken.

## Patentansprüche

1. Vorrichtung (1) zum Bereitstellen eines Versorgungsdruckes für einen Verbraucher (8) mit
- einem Hauptluftsystem (2), das eine Druckluftversorgungsanlage (3), eine Hauptluftbehälterleitung (5) und einen Hauptluftbehälter (4) aufweist, und
- einem Notfalldrucksystem (9) zur Erzeugung des Versorgungsdruckes unabhängig vom Hauptluftsystem (2), wobei das Hauptluftsystem (2) und das Notfalldrucksystem (9) unabhängig voneinander mit dem Verbraucher (8) verbindbar sind,
- einem Vorratsbehälter (18), der über ein Absperrventil (20) mit dem Hauptluftsystem (2) oder dem Verbraucher (8) verbunden ist, **dadurch gekennzeichnet, dass**
das Notfalldrucksystem (9) ausgangsseitig mit einem Dosierbehälter (17) verbunden ist.

2. Vorrichtung (1) nach Anspruch 1,
**dadurch gekennzeichnet, dass** das Hauptluftsystem (2) und/oder Notfalldrucksystem (9) jeweils über ein Rückschlagventil (6,21) mit dem Verbraucher (8) und dem Vorratsbehälter (18) verbunden sind.

3. Vorrichtung (1) nach Anspruch 1 oder 2,
**dadurch gekennzeichnet, dass** der Vorratsbehälter (18) hinsichtlich seines Aufnahmevolumens so bemessen ist, dass er ein für eine zuverlässige Bereitstellung des Versorgungsdruckes ausreichendes Gesamtvolumen aufweist.

4. Vorrichtung (1) nach einem der vorhergehenden Ansprüche, **dadurch gekennzeichnet, dass** das Absperrventil (20) ein ansteuerbares Leckage freies Absperrventil ist.

5. Vorrichtung (1) nach Anspruch 4,
**dadurch gekennzeichnet, dass** das Leckage freie Absperrventil (20) ein Magnetventil in Sitzbauweise mit Zwangsanhebung ist.

6. Vorrichtung (1) nach einem der vorhergehenden Ansprüche,
**dadurch gekennzeichnet, dass** das Notfalldrucksystem (9) eine Druckgasflasche (10) aufweist.

7. Vorrichtung (1) nach Anspruch 6,
**dadurch gekennzeichnet, dass** die Druckgasflasche (16) mit einem Druck beaufschlagt ist, der größer als der Versorgungsdruck ist.

8. Vorrichtung (1) nach Anspruch 6 oder 7,
**dadurch gekennzeichnet, dass** die Druckgasflasche (10) eine von Hand betätigbare Druckgasflasche ist.

9. Vorrichtung (1) nach einem der Ansprüche 1 bis 5,
**dadurch gekennzeichnet, dass** das Notfalldrucksystem (9) einen Energiespeicher und eine Notfalldrucklufterzeugungsanlage aufweist, die von einem Energiespeicher angetrieben ist.

10. Schienenfahrzeug mit einer Vorrichtung (1) gemäß einem der Ansprüche 1 bis 9.

## Claims

1. Device (1) for providing a supply pressure to a load (8) having
- a main air system (2) which has a pressurized air supply system (3), a main air tank line (5) and a main air tank (4), and
- an emergency pressure system (9) for generating the supply pressure independently of the main air system (2), wherein the main air system (2) and the emergency pressure system (9) can be connected to the load (8) independently of one another,
- a storage tank (18) which is connected to the main air system (2) or the load (8) by way of a cut-off valve (20), **characterised in that** the emergency pressure system (9) is connected on the output side to a dosing tank (17).

2. Device (1) according to claim 1,
**characterised in that** the main air system (2) and/or emergency pressure system (9) are connected via a return valve (6, 21) to the load (8) and the storage tank (18) in each instance.

3. Device (1) according to claim 1 or 2,
**characterised in that** the storage tank (18) is measured in terms of its receiving volume such that it has an overall volume which is adequate for a reliable provision of the supply pressure.

4. Device (1) according to one of the preceding claims, **characterised in that** the cut-off valve (20) is a controllable leak-free cut-off valve.

5. Device (1) according to claim 4, **characterised in that** the leak-free cut-off valve (20) is a magnetic valve in a seat-type design with forced lifting.

6. Device (1) according to one of the preceding claims, **characterised in that** the emergency pressure system (9) comprises a pressurized gas bottle (10).

7. Device (1) according to claim 6, **characterised in that** the pressurized gas bottle (16) is applied with a pressure which is greater than the supply pressure.

8. Device (1) according to claim 6 or 7, **characterised in that** the pressurized gas bottle (10) is a pressurized bottle which can be actuated by hand.

9. Device (1) according to one of claims 1 to 5, **characterised in that** the emergency pressure system (9) comprises an energy store and an emergency pressurized air generation system, which is driven by an energy store.

10. Rail vehicle having a device (1) according to one of claims 1 to 9.

## Revendications

1. Dispositif (1) de mise à disposition d'une pression d'alimentation pour un utilisateur ( 8 ) comprenant :
- un système ( 2 ) principal d'air, qui a une installation ( 3 ) d'alimentation en air comprimé, un conduit ( 5 ) de récipient d'air principal et un récipient ( 4 ) d'air principal et
- un système (9) de pression d'urgence pour la production de la pression d'alimentation indépendamment du système ( 2 ) principal d'air, le système ( 2 ) principal d'air et le système ( 9 ) de pression en cas d'urgence pouvant communiquer indépendamment l'un de l'autre avec l'utilisateur,
- un réservoir ( 18 ) qui communique avec le système ( 2 ) principal d'air ou avec l'utilisateur ( 8 ) par une vanne ( 20 ) d'arrêt,
**caractérisé en ce que**
le système ( 9 ) de pression d'urgence communique du côté de la sortie avec un récipient ( 17 ) de dosage.

2. Dispositif suivant la revendication 1, **caractérisé en ce que**
le système ( 2 ) principal d'air et/ou le système ( 9 ) de pression d'urgence communiquent respectivement avec l'utilisateur ( 8 ) et avec le réservoir ( 18 ) par un clapet antiretour ( 6,21 ).

3. Dispositif suivant la revendication 1 ou 2, **caractérisé en ce que**
le réservoir ( 18 ) est proportionné en ce qui concerne son volume de réception de manière à avoir un volume total suffisant pour une mise à disposition fiable de la pression d'alimentation.

4. Dispositif suivant l'une des revendications précédentes, **caractérisé en ce que**
la vanne ( 20 ) d'arrêt est une vanne d'arrêt sans fuite pilotable.

5. Dispositif suivant la revendication 4, **caractérisé en ce que**
la vanne ( 20 ) d'arrêt sans fuite est une électrovanne en mode de construction siège à soulèvement forcé.

6. Dispositif suivant l'une des revendications précédentes **caractérisé en ce que**
le système (9) de pression d'urgence a un cylindre ( 10 ) de gaz comprimé.

7. Dispositif suivant la revendication 6 **caractérisé en ce que** le cylindre ( 10 ) de gaz comprimé est soumis à une pression qui est plus grande que la pression d'alimentation.

8. Dispositif suivant la revendication 6 ou 6 **caractérisé en ce que**
le cylindre ( 10 ) de gaz comprimé est un cylindre de gaz comprimé pouvant être actionné manuellement.

9. Dispositif suivant d'une des revendications 1 à 5 **caractérisé en ce que**
le système ( 9 ) de pression d'urgence a un accumulateur d'énergie et une installation de production d'air comprimé d'urgence, qui est entraînée par l'accumulateur d'énergie.

10. Véhicule ferroviaire ayant un dispositif ( 1 ) suivant l'une des revendications 1 à 9.
